(19) Europäisches Patentamt
European Patent Office
Office européen des brevets

(11) **EP 4 721 591 A1**

(12) **EUROPEAN PATENT APPLICATION**
published in accordance with Art. 153(4) EPC

(43) Date of publication:
**08.04.2026 Bulletin 2026/15**

(21) Application number: **24814230.9**

(22) Date of filing: **20.05.2024**

(51) International Patent Classification (IPC):
**A24F 40/10** (2020.01)        **A24F 40/40** (2020.01)

(52) Cooperative Patent Classification (CPC):
**A24F 40/10; A24F 40/40; A24F 40/46; A24F 40/50;
A24F 40/57; A24F 40/90**

(86) International application number:
**PCT/CN2024/094232**

(87) International publication number:
**WO 2024/245031 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.06.2023 CN 202310646117**

(71) Applicant: **Smoore International Holdings Limited
Grand Cayman, KY1-1111 (KY)**

(72) Inventors:
• **WANG, Jianguo
  Shenzhen, Guangdong 518102 (CN)**

• **XIAO, Lingrong
  Shenzhen, Guangdong 518102 (CN)**
• **NAN, Bo
  Shenzhen, Guangdong 518102 (CN)**
• **TANG, Junjie
  Shenzhen, Guangdong 518102 (CN)**
• **XIA, Xinqi
  Shenzhen, Guangdong 518102 (CN)**

(74) Representative: **Winter, Brandl - Partnerschaft
mbB
Alois-Steinecker-Straße 22
85354 Freising (DE)**

(54) **ATOMIZATION CORE, ATOMIZER, AND ELECTRONIC ATOMIZATION DEVICE**

(57)    This application relates to the field of electronic atomization technologies, and in particular, to an atomization core, an atomizer, and an electronic atomization device. This application provides an atomization core. The atomization core includes a porous substrate and a heating element. The porous substrate is a porous glass-ceramic substrate. A tortuosity factor of the porous glass-ceramic substrate ranges from 1 to 2.5. In this application, the tortuosity factor of the porous glass-ceramic substrate is controlled to be in a range of 1 to 2.5, and a through-hole path is relatively short, so as to achieve a desirable e-liquid guiding effect.

FIG. 1

EP 4 721 591 A1

**Description**

**CROSS-REFERENCE TO RELATED APPLICATIONS**

This application claims priority to Chinese Patent Application No. 202310646117.6, filed with China National Intellectual Property Administration on June 1, 2023 and entitled "ATOMIZATION CORE, ATOMIZER, AND ELECTRONIC ATOMIZATION DEVICE", which is incorporated herein by reference in its entirety.

**TECHNICAL FIELD**

This application relates to the field of electronic atomization technologies, and in particular, to an atomization core, an atomizer, and an electronic atomization device.

**BACKGROUND**

An e-cigarette is a good substitute for a conventional cigarette. A common e-liquid e-cigarette is generally composed of three parts: a cigarette rod, an atomization core, and an atomization chamber. A battery is arranged in the cigarette rod, and the atomization core is set in the e-liquid chamber. The atomization core is the heart of an entire e-cigarette, e-liquid is atomized into smoke through the atomization core, and the atomized gas is discharged to a mouthpiece. Compared with the conventional cigarette, the e-cigarette has advantages of reducing harmful substances such as tar and CO in the smoke, ultimately achieving an objective of replacing smoking or alleviating addiction, and reducing absorption of the harmful substances. Currently, a manner in which a commercial electronic atomization device is atomized is mainly resistance heat-based atomization, and the e-liquid is atomized through the heating of the atomization core. Generally, the atomization core includes a porous substrate and a heating element. An existing porous substrate is usually made of a material with a porous structure, such as a cotton core and a porous ceramic, to achieve a function of guiding an atomization medium toward the heating element.

However, the ceramic material is usually manufactured by complex compositions such as diatomite, and a porous substrate manufactured by using the ceramic material has problems such as poor controllability of a pore structure and a poor e-liquid guiding effect.

**SUMMARY**

An objective of this application is to overcome a defect of a poor e-liquid guiding effect of pores of an atomization core of an existing porous ceramic material, so as to provide an atomization core, an atomizer, and an electronic atomization device.

To achieve the foregoing objective, this application adopts the following technical solutions.

This application provides an atomization core. The atomization core includes a porous substrate and a heating element. The porous substrate is a porous glass-ceramic substrate. A tortuosity factor of the porous glass-ceramic substrate ranges from 1 to 2.5.

Optionally, the tortuosity factor of the porous glass-ceramic substrate ranges from 1 to 2.

Optionally, the tortuosity factor of the porous glass-ceramic substrate ranges from 1.3 to 1.9.

The tortuosity factor is also referred to as aa tortuosity, and a curvature, and represents a ratio of an "effective average path length" in a porous medium to a shortest distance measured along a macroscopically seeping direction. In other words, the tortuosity factor is defined as $\tau = \dfrac{L_t}{L_o}$. In the formula, Lt is a true length of a curved path, $L_0$ is a straight-line length (a macroscopically shortest length) of a medium, and $\tau$ is the tortuosity factor. Because a capillary tube has a complex shape, a fluid in the porous medium does not flow along a straight line, but flows forward in twists and turns. The tortuosity factor reflects a degree of such twists and turns.

Optionally, a porosity of the porous glass-ceramic substrate is more than 50%.

Optionally, the porosity of the porous glass-ceramic substrate ranges from 60% to 80%.

Optionally, an average pore size of the porous glass-ceramic substrate ranges from 15 μm to 45 μm.

Optionally, the porous glass-ceramic substrate includes pores formed by openings of glass-ceramic bubbles.

Optionally, the porous glass-ceramic substrate further includes pores formed by a pore-forming agent.

Optionally, the heating element is a metal heating film.

The heating element is arranged on at least one surface of the porous glass-ceramic substrate.

Optionally, the metal heating film is selected from at least one of stainless steel or a nickel-containing alloy.

This application provides an atomizer. The atomizer includes the foregoing atomization core.

This application further provides an electronic atomization device. The electronic atomization device includes the foregoing atomizer, and further includes a battery assembly.

Beneficial effects of this application are as follows.

This application provides an atomization core. The atomization core includes a porous substrate and a heating element. The porous substrate is a porous glass-ceramic substrate. A tortuosity factor of the porous glass-ceramic substrate ranges from 1 to 2.5. It is found through research that the porous glass-ceramic substrate with a specific tortuosity factor helps make an entire flow time of an atomization medium shorter and an e-liquid guiding effect better under a same factor such as a capillarity force.

## BRIEF DESCRIPTION OF THE DRAWINGS

To describe technical solutions in specific implementations of this application or in the related art more clearly, the accompanying drawings required for describing the specific implementations or the related art are briefly described below. Apparently, the accompanying drawings in the following description show some implementations of this application, and a person of ordinary skill in the art may still derive other drawings from these accompanying drawings without creative efforts.

FIG. 1 is a comparison diagram of vapor amounts of dies of atomization cores at different powers according to Embodiment 2 and Comparative example 1 of this application.

FIG. 2 is a diagram of a temperature curve of an atomization core according to Embodiment 2 of this application.

FIG. 3 is a distribution diagram of a temperature field of an atomization core according to Embodiment 2 of this application.

FIG. 4 is a diagram of deposition of soot in an atomization core after 300 puffs according to Embodiment 2 of this application.

FIG. 5 is a schematic diagram of an atomizer according to this application.

FIG. 6 is a schematic diagram of an electronic atomization device according to this application.

Reference numerals: 1. Atomizer; 2. Battery assembly.

## DETAILED DESCRIPTION

The following embodiments are provided to better understand this application and are not intended limit an optimum implementation, and do not constitute a limitation to the content and the scope of protection of this application. Any product identical or similar to this application obtained by anyone under the inspiration of this application or by combining this application with the features of other prior art shall fall within the scope of protection of this application.

If no specific experimental steps or conditions are specified in the embodiments, the experiments can be carried out according to the conventional experimental steps or conditions described in the literature in the art. Reagents or instruments used without indicating the manufacturer are all conventional reagent products that can be purchased commercially.

An atomization manner of a commercial e-cigarette is mainly resistance heat-based atomization, and the e-liquid is atomized through the heating of the atomization core. An existing atomization core usually includes a porous substrate and a heating element. The porous substrate is usually made of a material with a porous structure, such as a cotton core and a porous ceramic, to achieve a function of guiding an atomization medium toward the heating element. However, the ceramic material is usually manufactured by complex compositions such as diatomite, and the porous substrate manufactured by using the ceramic material has poor controllability of a pore structure and a poor e-liquid guiding effect.

Therefore, this application provides an atomization core. The atomization core includes a porous substrate and a heating element. The porous substrate is a porous glass-ceramic substrate. A tortuosity factor of the porous glass-ceramic substrate ranges from 1 to 2.5. The inventor found that the porous glass-ceramic substrate with a specific tortuosity factor has a relatively short through-hole path, which helps make an entire flow time of an atomization medium shorter and an e-liquid guiding effect better under a same factor such as a capillarity force. In addition, a local high temperature of an atomization surface caused by insufficient liquid supply is further avoided, a burnt flavor is avoided, and excessive soot caused by the local high temperature is also avoided, so as to improve a taste and a service life.

In some optional implementations, optionally, the tortuosity factor of the porous glass-ceramic substrate is 1, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, 1.30, 1.31, 1.32, 1.33, 1.34, 1.35, 1.37, 1.39, 1.40, 1.42, 1.45, 1.47, 1.5, 1.52, 1.53, 1.55, 1.58, 1.60, 1.63, 1.65, 1.68, 1.70, 1.72, 1.75, 1.78, 1.80, 1.84, 1.85, 1.87, 1.90, 1.94, 1.95, 1.98, 1.99, 2, 2.01, 2.02, 2.03, 2.04, 2.05, 2.06, 2.07, 2.08, 2.09, 2.10, 2.11, 2.12, 2.13, 2.14, 2.15, 2.16, 2.17, 2.18, 2.19, 2.20, 2.21, 2.22, 2.23, 2.24, 2.25, 2.26, 2.27, 2.28, 2.29, 2.30, 2.31, 2.32, 2.33, 2.34, 2.35, 2.36, 2.37, 2.38, 2.39, 2.40, 2.41, 2.42, 2.43, 2.44, 2.45, 2.46, 2.47, 2.48, 2.49, or 2.5. Further, the tortuosity factor of the porous glass-ceramic substrate ranges from 1 to 2. Still further, the tortuosity factor of the porous glass-ceramic substrate ranges from 1.3 to 1.9. During actual application of the atomization core and the atomizer, a user does not always inhale. During storage, an excessively low tortuosity factor may cause an atomization substrate of a liquid to leak out through the pores of the atomization core, causing a liquid leakage problem. Therefore, a proper tortuosity factor can consider both a liquid guiding effect and a liquid locking effect, to ensure that liquid leakage is not caused during storage, thereby improving user experience.

In some optional implementations, a porosity of the porous glass-ceramic substrate is more than 50%. Optionally, the porosity of the porous glass-ceramic substrate ranges from 60% to 80%. The porous glass-ceramic substrate includes pores formed by openings of glass-ceramic bubbles. In some other optional implementations, the pores of the porous glass-ceramic substrate include pores formed by openings of glass-ceramic bubbles, and further includes pores formed by a pore-forming agent. Further, in the porous glass-ceramic substrate, a volume of the pores formed by the openings of the glass-ceramic bubbles accounts for more than 70% of a total pore volume of the porous glass-ceramic substrate. For example, optionally, a volume of the pores formed by the openings of the glass-ceramic bubbles accounts for 70.1%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100% of a total pore volume of the porous glass-ceramic substrate.

The porosity (volume porosity) is defined as a proportion of the total pore volume in the porous glass-ceramic substrate to the volume of the porous glass-ceramic substrate.

In some optional implementations, an average pore size of the porous glass-ceramic substrate ranges from 15 $\mu$m to 45 $\mu$m. For example, optionally, the average pore size of the porous glass-ceramic substrate is 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, 30 $\mu$m, 31 $\mu$m, 32 $\mu$m, 33 $\mu$m, 34 $\mu$m, 35 $\mu$m, 36 $\mu$m, 37 $\mu$m, 38 $\mu$m, 39 $\mu$m, 40 $\mu$m, 41 $\mu$m, 42 $\mu$m, 43 $\mu$m, 44 $\mu$m, or 45 $\mu$m.

In some optional implementations, the heating element is a metal heating film. The heating element is arranged on at least one surface of the porous glass-ceramic substrate. Further, the metal heating film is selected from at least one of stainless steel or a nickel-containing alloy.

In some optional implementations, a manufacturing method of the heating element arranged on at least one surface of the porous glass-ceramic substrate includes at least one of printing, welding, evaporation, or deposition. For example, optionally, a heating element paste is printed on a substrate, and is formed through sintering at a preset temperature. Optionally, the heating element or a heating mesh is welded to the substrate. Optionally, the heating element is evaporated/deposited on the substrate through physical vapor deposition (PVD) or chemical vapor deposition (CVD).

In this application, the atomization core may be obtained through a conventional method in the art, or may be obtained through sintering of the glass-ceramic bubble. The glass-ceramic bubbles have a hollow structure, which is also referred to as a hollow glass "microsphere" and may be commercially available. In some optional implementations, the manufacturing method of obtaining the atomization core through sintering of the glass-ceramic bubbles includes the following steps.

In some optional implementations, the manufacturing method of the atomization core includes the following steps.

1) Mix glass bubbles with a binder, a slipping agent, and water, and perform pressing and forming to obtain a green body.
2) Perform a first sintering, a second sintering, and a third sintering on the green body in step 1), to obtain the porous glass-ceramic substrate.
3) Manufacture a raw material of the heating element on the porous glass-ceramic substrate in step 2), and form through sintering.

In some optional implementations, in step (1), the binder may be an organic binder. Specifically, the binder is selected from at least one of methylcellulose, hydroxyethyl cellulose, or hydroxypropyl methylcellulose. The slipping agent may be a slipping agent of an aliphatic hydrocarbon, for example, a paraffin, or a metal stearate. Specifically, the slipping agent is sodium stearate.

In some optional implementations, a pressure for pressing and forming in step 1) ranges from 1 bar to 30 bar. Most of the glass bubbles do not fragment during the pressing and forming process, and a complete spherical shape of the single glass bubble is maintained. Therefore, the pressure for pressing and forming may be properly adjusted based on a compressive strength of the selected glass bubble.

In some optional implementations, in step 2), a first temperature of the first sintering is at least 200°C, for example, 300°C to 400°C, and/or a first residence time is at least 1 minute, for example, 1 hour to 10 hours. During the sintering process at the temperature, a substance such as a solvent and a binder is removed from the green body.

In some optional implementations, a second temperature of the second sintering is greater than 400°C and less than a softening point of glass of the glass bubble. for example, 500°C, 600°C, or 700°C, and a second residence time thereof is at least 1 minute, for example, 1 hour to 10 hours. The purpose of the second temperature is greater than 400°C and less than the softening point of the glass of the glass bubbles is to keep an original form of the green body unchanged.

In addition, because the temperature has already exceeded 400°C, a glass composition in the glass bubbles starts to change. A disordered glass phase partially crystallizes to a crystal phase within the temperature range, and the glass bubbles are converted into the glass-ceramic bubbles. In addition, due to the conversion, some of the glass bubbles begin to crack and have at least one opening. Therefore, the sintering time within the temperature range may be properly adjusted to regulate the crystallinity of the porous glass-ceramic. It may be understood that the glass bubbles of the raw material may also include a certain proportion of the crystal phase, which may shorten the sintering time in this process.

In some optional implementations, a third temperature of the third sintering is greater than the softening point of the glass. Specifically, a temperature of the softening point of the glass is less than 900°C. A third residence time may be at least 1 minute, for example, 1 hour to 10 hours. At this temperature, the glass composition has flowability. Therefore, adjacent glass-ceramic bubbles are directly adhered to each other. In addition, because the glass-ceramic bubbles still have a crystal phase composition, the crystal phase composition, as a framework, causes the form of the glass-ceramic bubbles to not collapse, and still maintains a basic complete form. In addition, the glass-ceramic bubbles are further cracked to form a large quantity of openings. The openings are in communication with each other to form pores. The pores extend through the porous glass-ceramic substrate and reach a surface of the porous glass-ceramic substrate.

The third temperature is greater than the softening point of the glass of the glass bubble. The glass-ceramic bubbles are heated at least to a softening temperature of an amorphous glass, so that most of the glass-ceramic bubbles open due to expansion of air in the bubble. In addition, the heating causes the adjacent glass-ceramic bubbles to sinter together and form a bond. Overall, the bonded open glass-ceramic bubbles form the pores of the porous glass-ceramic substrate. The glass-ceramic bubbles are applied to an atomizer and an electronic atomization device, so as to effectively improve atomization efficiency and a liquid guiding effect.

In some optional implementations, a mass ratio of the glass bubbles to the binder, the slipping agent, and the water is (80-140) : (10-40) : (2.5-3.6) : (50-85).

In some optional implementations, in step 3), the raw material of the heating element may be at least one of the electronic paste (metal paste), the heating wire, or the heating mesh. The electronic paste may be directly applied to the surface of the porous glass-ceramic substrate through screen printing based on a preset contour, and then is formed through sintering at the preset temperature. The sintering temperature may be adaptively adjusted based on types of a bonding phase and a metal composition in the electronic paste. Generally, the sintering temperature ranges from 400°C to 800°C.

In some optional implementations, the glass composition of the glass bubbles may be soda-lime silicate glass, borosilicate glass, or another glass. Specifically, the glass composition may include: 74-85% of $SiO_2$, 6.5-10% of CaO, 5-9% of $B_2O_3$, 0.4-2% of $Al_2O_3$, 0.01-1% of $Fe_2O_3$, 1-3% of $Na_2O$, and 0.1-0.5% of $K_2O$.

In some optional embodiments, in step 1), the pore-forming agent is further added. Optionally, the pore-forming agent is selected from at least one of starch, polymethyl methacrylate (PMMA), polystyrene (PS), or graphite. Optionally, a particle size of the pore-forming agent may range from 1 $\mu$m to 150 $\mu$m. It may be understood that the addition of the pore-forming agent may further increase the porosity of the porous glass-ceramic substrate in a case that the strength of the glass bubbles of the raw material is ensured.

In some optional implementations, in step 1), a second inorganic material is further included. The second inorganic material may be at least one of clay, talc, silica, or alumina. Melting points or softening points of the foregoing materials are greater than the softening point of the glass in the glass bubble.

In some optional implementations, a mass ratio of the glass bubbles to the binder, the slipping agent, the water, the pore-forming agent, and the second inorganic material is (80-140) : (10-40) : (2.5-3.6) : (50-85) : (0-45): (0-7).

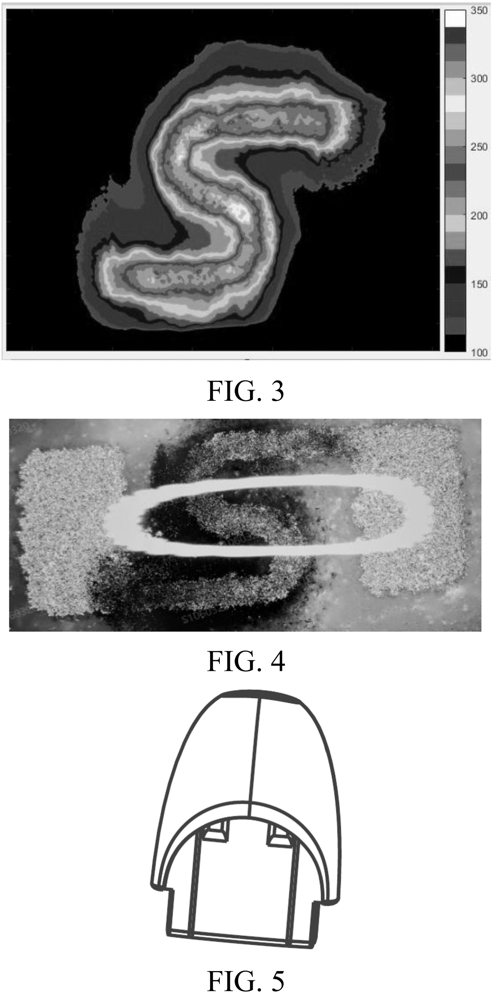

As shown in FIG. 5, this application further provides an atomizer. The atomizer includes the foregoing atomization core. The atomizer includes a shell. A liquid storage tank and an atomization cavity are formed in the shell. The liquid storage tank is configured to store a liquid atomization medium, and the atomization cavity is configured to accommodate the foregoing atomization core. The atomization core may atomize the liquid atomization medium.

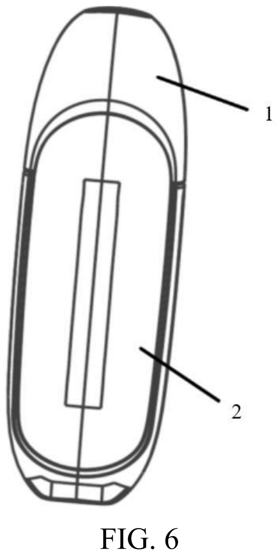

As shown in FIG. 6, this application further provides an electronic atomization device. The electronic atomization device includes the foregoing atomizer 1, and further includes a battery assembly 2. The battery assembly and the atomizer may be of an integrated structure or a detachable structure. The battery assembly is configured to supply power to the atomizer based on a preset mode, so that the atomizer atomizes the liquid atomization medium based on the preset mode.

This application is further described in detail below with reference to specific embodiments. These embodiments cannot be understood as limiting the protection scope of this application.

In this application, the composition of the glass bubbles is soda-lime silicate glass. The glass bubbles of the raw material with a same composition are used in the following embodiments, where D10=18.61 $\mu$m, D50=39.38 $\mu$m, and D90=69.47 $\mu$m, and the porosity in the single glass bubble is 84.8%. Main compositions of the glass bubbles of the raw material are: Si: 41.647 wt%, O: 49.375 wt%, Na: 3.778 wt%, Ca: 4.619 wt%, Mg: 0.201 wt%, and Al: 0.379 wt%.

Embodiment 1

This embodiment provides an atomization core. A manufacturing method thereof includes the following steps.

1) Mix 80 g of glass bubbles with 30 g of hydroxyethyl cellulose, 2.5 g of sodium stearate, and 80 g of water, and perform pressing and forming to obtain a green body, where a forming pressure is 7 bar.
2) Perform a first sintering, a second sintering, and a third sintering on the green body in step 1), to obtain a porous glass-ceramic substrate, where a first sintering temperature is 310°C, a first sintering time is 3h, a second sintering temperature is 540°C, a second sintering time is 3h, a third sintering temperature is 1000°C, and a third sintering time is 4h.
3) Print a 310 stainless steel paste on the porous glass-ceramic substrate in step 2) and form through sintering, a sintering temperature being 700°C and a sintering time being 3h, to obtain the atomization core.

Embodiment 2

This embodiment provides an atomization core. A manufacturing method thereof includes the following steps.

1) Mix 140 g of glass bubbles with 35.02 g of hydroxyethyl cellulose, 3.52 g of sodium stearate, 2.78 g of clay, and 80.04 g of water, and perform pressing and forming to obtain a green body, where a forming pressure is 24 bar.
2) Perform a first sintering, a second sintering, and a third sintering on the green body in step 1), to obtain a porous glass-ceramic substrate, where a first sintering temperature is 350°C, a first sintering time is 2.5h, a second sintering temperature is 690°C, a second sintering time is 3h, a third sintering temperature is 1500°C, and a third sintering time is 3.5h.
3) Print a 310 stainless steel paste on the porous glass-ceramic substrate in step 2) and form through sintering, a sintering temperature being 800°C and a sintering time being 5h, to obtain the atomization core.

Embodiment 3

This embodiment provides an atomization core. A manufacturing method thereof includes the following steps.

1) Mix 135 g of glass bubbles with 40g of hydroxyethyl cellulose, 3 g of sodium stearate, 7 g of clay, and 85 g of water, and perform pressing and forming to obtain a green body, where a forming pressure is 15 bar.

Step 2) and Step 3) are the same as those in Embodiment 1, to obtain the atomization core.

Comparative example 1

This comparative example provides an atomization core, as recorded in the patent CN114668183A. Specifically, a porous body of the atomization core includes a large-size structural layer and a small-size structural layer that are superposed. An average pore size of the large-size structure layer ranges from 50 $\mu$m to 150 $\mu$m, and an average pore size of the small-size structure layer ranges from 20 $\mu$m to 100 $\mu$m. An average porosity of the porous body ranges from 50% to 75%.

Comparative example 2

This comparative example provides an atomization core. A manufacturing method thereof includes the following steps.

1) Mix 80 g of glass powder with 30 g of hydroxyethyl cellulose, 2.5 g of sodium stearate, 80 g of a pore-forming agent, and 160 g of water, and perform pressing and forming to obtain a green body, where the molding pressure is 20 bar and the pore-forming agent is polymethyl methacrylate (PMMA).

Step 2) and Step 3) are the same as those in Embodiment 1, to obtain the atomization core.

Test example 1

Testing for a tortuosity factor, an average e-liquid guiding time, a porosity, and an average pore size is performed the porous substrates in the atomization cores in the embodiments and the comparative examples of this application. A test method for the average e-liquid guiding time is as follows. The porous substrate of the atomization core is placed in an oven at 120°C for 15 min, and then is placed in a drying vessel for natural cooling (approximately 15 min). 0.70±0.01 g of e-liquid is placed in exclusive e-liquid guide metalware, and the porous substrate is placed in the metalware, and a time required for completely immersing the porous substrate with the e-liquid is recorded through a stop watch. The test method for the porosity, the average pore size, and the tortuosity factor is a mercury intrusion method (the test device is a mercury porosimeter).

An inhalation experiment is performed through the atomization core in the embodiment, to respectively test for soot, a lifespan, and an inhalation taste of the electronic atomization device. After a preset quantity of puffs (the preset quantity of puffs in this application is 500), the soot on the surface of the atomization core is observed, to determine a deposit condition of the soot. During a process of inhaling the preset quantity of puffs, whether a failure situation exists is tested, and statistics collection is performed to record a lifespan situation thereof. The failure situation mainly includes: 1. A significant abnormal change of a resistance of the atomization core

(for example, a significant increase in the resistance caused by splitting or shedding of the heating element). 2. A fog output volume is less than half of an initial atomization amount. The inhalation taste is determining, by a tester, whether any abnormal taste such as a burnt flavor exists during a preset process of inhaling 500 puffs. The foregoing test condition are 6.5 W power and a die (not assembled as an atomizer). When the taste is tested, the atomization core is assembled as an atomizer for testing.

Table 1

| | Tortuosity factor | Porosity (%) | Average pore size (μm) | Average e-liquid guiding time (s) | Soot | Taste | Lifespan (500 puffs) |
|---|---|---|---|---|---|---|---|
| Embodiment 1 | 1.58 | 71.87 | 23.82 | 48.70 | Less soot | No burnt flavor | No failure |
| Embodiment 2 | 1.75 | 70.99 | 17.56 | 99.46 | Less soot | No burnt flavor | No failure |
| Embodiment 3 | 1.41 | 81.49 | 22.55 | 35.57 | Less soot | No burnt flavor | No failure |
| Comparative example 1 | - | 50-75 | 20-100/50-150 | - | - | - | - |
| Comparative example 2 | 3.5 | 65 | 20.5 | - | More soot | No burnt flavor | Failure after 380 puffs |

Test example 2

The core dies of the atomization cores in Embodiment 2 and Comparative example 1 are tested for vapor amounts under different powers, and the e-liquid used are strawberry watermelon e-liquid and Laike watermelon e-liquid. A specific test method is as follows. An inhalation experiment is performed on the atomization core. Each inhalation process (namely, each puff) includes: inhaling for 3s and then pausing for 8s, testing the vapor amount in each inhalation process, and performing statistics collection to obtain an average value.

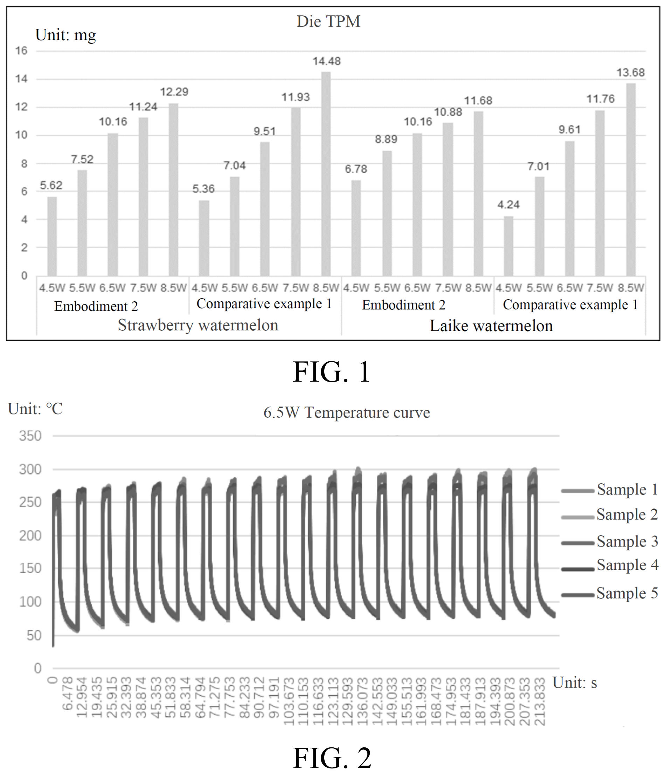

The test result is as shown in FIG. 1. When a power range of the atomization core ranges from 4.5W to 6.5W in Embodiment 2, the vapor amount linearly increases, and tends to slow down at 6.5W. Therefore, the atomization core has high atomization efficiency. When the Laike watermelon e-liquid is used for testing, the atomization efficiency at 4.5W is 1.51 mg/W, the atomization efficiency at 5.5W is 1.62 mg/W, and the atomization efficiency at 6.5W is 1.56 mg/W.

For the atomization core in Comparative example 1: in a range of 4.5W to 8.5W, the vapor amount linearly increases. In a range of 4.5W to 6.5W, the vapor amount is lower than that of the atomization core in this embodiment.

The inventor considered through analysis that a smaller tortuosity factor indicates a shorter relative distance for e-liquid to pass through the atomization core, which makes an entire flow time of an atomization medium shorter, a vapor amount larger, and an e-liquid guiding effect better under a same factor such as a capillarity force. In a case of a relatively low power, for example, 4.5W to 6.5W, the atomization core of this application provides sufficient liquid supply and has high atomization efficiency. However, in a case of a relatively high power, a large-size atomization core is more advantageous, but the large-size atomization core causes a problem of liquid leakage. Therefore, the atomization core of this application has a liquid guiding rate, atomization efficiency, and a liquid locking effect.

Test example 3

A temperature field distribution test is performed on the atomization core in Embodiment 2, and the tested e-liquid is fruit (watermelon) taste e-liquid. The test method is as follows. The atomization core is assembled with an atomizer and an electronic atomization device for an inhalation experiment. Each inhalation process (namely each puff) includes 3s of inhalation and 8s of pause. A distribution of the temperature field is obtained by using an infrared thermometer for the temperature field of the atomization core, and then statistics collection is performed on the distribution of the temperature field. In total, 5 parallel samples are tested, and are respectively denoted as Sample 1 to Sample 5.

For the test result, reference is further made to FIG. 2 and FIG. 3. The abscissa in FIG. 2 represents a time, and the unit is second (s). In other words, a total quantity of puffs is 20. The ordinate in FIG. 2 represents a temperature, and the unit is degrees centigrade (°C). As shown in FIG. 2, during each inhalation process (each puff), a temperature of the main atomization zone ranges from 250°C to 300°C. FIG. 3 is a temperature field distribution diagram in one puff on one sample (Sample 1), where no individual high-temperature zone (a zone exceeding 310°C) occurs. It can be learned that the entire liquid supply of the atomization core is sufficient, and the liquid guiding effect of the porous substrate is desirable. FIG. 4 shows deposition of soot on a surface of an atomization surface after 300 puffs on a sample. Although a small amount of soot exists, the soot is relatively evenly distributed in an entire zone of the atomization surface, and does not aggregate on the surface of the heating element. Therefore, the entire service life is facilitated to improve.

Therefore, the inventor considered through analysis that the temperature field is concentrated at a high efficiency zone and has a certain temperature field gradient. Therefore, the atomization core has high atomization efficiency, is not easy to scale, and has rich taste layers.

Obviously, the above embodiments are merely examples for clear description and not limitations on the implementations. For a person of ordinary skill in the art, other changes or alterations in different forms may also be made based on the foregoing description. All implementations are not required and cannot be exhaustive herein. The obvious changes or modifications derived therefrom are still within the protection scope of this application.

## Claims

1. An atomization core, comprising a porous substrate and a heating element, wherein the porous substrate is a porous glass-ceramic substrate, and a tortuosity factor of the porous glass-ceramic substrate ranges from 1 to 2.5.

2. The atomization core of claim 1, wherein the tortuosity factor of the porous glass-ceramic substrate ranges from 1 to 2.

3. The atomization core of claim 2, wherein the tortuosity factor of the porous glass-ceramic substrate ranges from 1.3 to 1.9.

4. The atomization core of any one of claims 1 to 3, wherein a porosity of the porous glass-ceramic substrate is more than 50%; and
optionally, the porosity of the porous glass-ceramic substrate ranges from 60% to 80%.

5. The atomization core of any one of claims 1 to 4, wherein an average pore size of the porous glass-ceramic substrate ranges from 15 $\mu$m to 45 $\mu$m; and
optionally, the average pore size of the porous glass-ceramic substrate ranges from 17 $\mu$m to 24 $\mu$m.

6. The atomization core of any one of claims 1 to 5, wherein the porous glass-ceramic substrate comprises pores formed by openings of glass-ceramic bubbles.

7. The atomization core of any one of claims 1 to 6, wherein the heating element is a metal heating film; and
the heating element is arranged on at least one surface of the porous glass-ceramic substrate.

8. The atomization core of claim 7, wherein the metal heating film is selected from at least one of stainless steel or a nickel-containing alloy.

9. An atomizer (1), comprising the atomization core of any one of claims 1 to 8.

10. An electronic atomization device, comprising the atomizer (1) of claim 9, and further comprising a battery assembly (2).

FIG. 1

FIG. 2

FIG. 3

FIG. 4

FIG. 5

FIG. 6

## INTERNATIONAL SEARCH REPORT

| International application No. |
|---|
| **PCT/CN2024/094232** |

**A. CLASSIFICATION OF SUBJECT MATTER**

A24F40/10(2020.01)i; A24F40/40(2020.01)i

According to International Patent Classification (IPC) or to both national classification and IPC

**B. FIELDS SEARCHED**

Minimum documentation searched (classification system followed by classification symbols)

IPC:A24F40/-, A24F47/-,C04B38/-, C04B35/-

Documentation searched other than minimum documentation to the extent that such documents are included in the fields searched

Electronic data base consulted during the international search (name of data base and, where practicable, search terms used)

CNABS, CNTXT, CNKI, ENTXT, VEN: 雾化器, 雾化芯, 多空基体, 发热体, 玻璃陶瓷, 迂曲度, 迂回度, 孔隙率, 路径, 短, 导油, atomizer, atomizing wick, multihollow matrix, heat+, generator, glass ceramic, tortuosity, porosity, pathway, short, oil, guid+

**C. DOCUMENTS CONSIDERED TO BE RELEVANT**

| Category* | Citation of document, with indication, where appropriate, of the relevant passages | Relevant to claim No. |
|---|---|---|
| X | CN 114668183 A (HAINAN MOER BROTHERS TECHNOLOGY CO., LTD.) 28 June 2022 (2022-06-28) description, paragraphs 38-100 | 1-10 |
| X | CN 113149697 A (SHENZHEN GEEKVAPE TECHNOLOGY CO., LTD.) 23 July 2021 (2021-07-23) description, paragraphs 85-98 | 1-10 |
| X | CN 114195493 A (SHENZHEN GEEKVAPE TECHNOLOGY CO., LTD.) 18 March 2022 (2022-03-18) description, paragraphs 97-129 | 1-10 |
| X | CN 115316707 A (SHENZHEN GEEKVAPE TECHNOLOGY CO., LTD.) 11 November 2022 (2022-11-11) description, paragraphs 32-51 | 1-10 |
| A | CN 113475770 A (SHENZHEN GEEKVAPE TECHNOLOGY CO., LTD.) 08 October 2021 (2021-10-08) entire document | 1-10 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **05 September 2024** | **06 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/094232** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 114634372 A (SHANDONG SINOCERA FUNCTIONAL MATERIAL CO., LTD.) 17 June 2022 (2022-06-17)<br>entire document | 1-10 |
| A | CN 115108839 A (BYD CO., LTD.) 27 September 2022 (2022-09-27)<br>entire document | 1-10 |
| A | CN 115867381 A (BASF SE) 28 March 2023 (2023-03-28)<br>entire document | 1-10 |
| A | CN 116058550 A (BYD PRECISION MANUFACTURE CO., LTD.) 05 May 2023 (2023-05-05)<br>entire document | 1-10 |
| A | WO 2022134770 A1 (SHENZHEN WOODY VAPES TECHNOLOGY CO., LTD.) 30 June 2022 (2022-06-30)<br>entire document | 1-10 |

Form PCT/ISA/210 (second sheet) (July 2022)

**INTERNATIONAL SEARCH REPORT**
Information on patent family members

International application No.

**PCT/CN2024/094232**

| Patent document cited in search report | | | Publication date (day/month/year) | Patent family member(s) | | | Publication date (day/month/year) |
|---|---|---|---|---|---|---|---|
| CN | 114668183 | A | 28 June 2022 | None | | | |
| CN | 113149697 | A | 23 July 2021 | None | | | |
| CN | 114195493 | A | 18 March 2022 | None | | | |
| CN | 115316707 | A | 11 November 2022 | None | | | |
| CN | 113475770 | A | 08 October 2021 | None | | | |
| CN | 114634372 | A | 17 June 2022 | None | | | |
| CN | 115108839 | A | 27 September 2022 | None | | | |
| CN | 115867381 | A | 28 March 2023 | WO | 2021260185 | A1 | 30 December 2021 |
| | | | | EP | 4171800 | A1 | 03 May 2023 |
| | | | | WO | 2021259427 | A1 | 30 December 2021 |
| | | | | WO | 2021260182 | A1 | 30 December 2021 |
| | | | | JP | 2023532004 | A | 26 July 2023 |
| | | | | JP | 2023531736 | A | 25 July 2023 |
| | | | | US | 2023256414 | A1 | 17 August 2023 |
| | | | | US | 2023302432 | A1 | 28 September 2023 |
| | | | | EP | 4171802 | A1 | 03 May 2023 |
| CN | 116058550 | A | 05 May 2023 | None | | | |
| WO | 2022134770 | A1 | 30 June 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310646117

- CN 114668183 A